(19) Europäisches Patentamt
European Patent Office
Office européen des brevets

(11) **EP 1 293 948 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.⁷: **B61L 27/00**

(21) Anmeldenummer: **02090328.2**

(22) Anmeldetag: **12.09.2002**

(54) **Verfahren und Anordnung zur Fahrplanoptimierung in Liniennetzen**

Method and device to optimize route plans on line networks

Procédé et dispositif d'optimisation du plan d'itinéraire sur les réseaux de transport en ligne

(84) Benannte Vertragsstaaten:
**AT BE BG CH CY CZ DE DK EE ES FI FR GB GR IE IT LI LU MC NL PT SE SK TR**

(30) Priorität: **14.09.2001 DE 10147231**

(43) Veröffentlichungstag der Anmeldung:
**19.03.2003 Patentblatt 2003/12**

(73) Patentinhaber: **SIEMENS AKTIENGESELLSCHAFT**
**80333 München (DE)**

(72) Erfinder: **Erhard, Karl-Heinz**
**38126 Braunschweig (DE)**

(56) Entgegenhaltungen:
**EP-A- 1 098 544**     **DE-A- 19 932 833**
**DE-A- 19 950 185**     **US-A- 5 794 172**

**Beschreibung**

Verfahren zur Fahrplanoptimierung in Liniennetzen unter Berücksichtigung des Optimierungsparameters "Energieverbrauch" sowie eine Anordnung und ein Computerprogramm zur Ausführung des Verfahrens und ein entsprechendes computerlesbares Speichermedium

Die Erfindung betrifft ein Verfahren zur Fahrplanoptimierung in Liniennetzen unter Berücksichtigung des Optimierungsparameters "Energieverbrauch" sowie eine Anordnung und ein Computerprogramm zur Ausführung des Verfahrens und ein entsprechendes computerlesbares Speichermedium, welche insbesondere eingesetzt werden können zur Erstellung von Fahrplänen, die optimal bezüglich des Energieverbrauchs und/oder der zeitlichen Verteilung des Energiebedarfs ausgelegt sind.

Bei der Gestaltung von Fahrplänen ist i. a. ein Problem der folgenden Art zu lösen: Gegeben sei ein Netz von Bahnlinien, welche entlang mehrerer Bahnhöfe verlaufen. In einem Teil der Bahnhöfe werden Passagierhalte durchgeführt. Gewisse Linien können sich in Umsteigebahnhöfen kreuzen, wo ein Teil der Passagiere die Linien wechselt. Für jede Linie soll ein Fahrplan erstellt werden, der für beide Fahrtrichtungen die sollmäßigen Fahrten (in Form von Takten und Abfahrtszeiten an den Bahnhöfen) enthält und hinsichtlich verschiedener Parameter ein Optimum darstellen soll.

Herkömmlicherweise wurden bei der Optimierung in der Regel folgende Aspekte berücksichtigt:

- die Summe der Umsteigezeiten zwischen den Linien dieser Fahrpläne,
- die Anzahl der benötigten Fahrzeuge,
- die Verspätungssumme der betrachteten Fahrpläne während des Betriebs.

Ein Großteil dieser Art von Fahrplänen für schienengebundene Verkehrssysteme wird zurzeit noch manuell konstruiert bzw. optimiert: Dabei werden Aspekte des Energieverbrauchs wie eine Energieoptimierung mit Einbeziehung der Rückspeiseeffekte oder eine Desynchronisation der Anfahrvorgänge i. a. nicht berücksichtigt. Für die Optimierung der weiteren Aspekte, wie z. B. Summe der Umsteigezeiten, Anzahl der benötigten Fahrzeuge oder Verspätungssumme der betrachteten Fahrpläne, werden Erfahrungswerte aus bereits umgesetzten Fahrplänen zugrunde gelegt und typischerweise stark lokale Anpassungen der Fahrpläne durchgeführt. Was bei der manuellen Optimierung generell fehlt ist eine ausreichend globale Betrachtungsweise. Automatische Verfahren zur Fahrplankonstruktion (wie sie z. B. in [1] enthalten sind) erzeugen zwar bessere Lösungen als manuell konstruierte Fahrpläne, berücksichtigen aber nur gewisse Teilaspekte (z. B. die Fahrzeuganzahl).

Bei dem in [2] beschriebenen automatische Verfahren wird eine globale Zielfunktion mit Hilfe generischer Algorithmen optimiert. Jedoch werden dort weder Aspekte der Energieoptimierung noch Desynchronisationsprobleme berücksichtigt. Außerdem sind generische Verfahren nicht ausreichend effizient.

Für die Erzeugung eines Zugfahrplans wird in der US 5,794,172 ein Verfahren vorgeschlagen, durch welches die verbrauchte Energie eines einzelnen Zuges für ein vorbestimmtes Reisegebiet minimiert wird unter Beibehaltung einer vorbestimmten Fahrzeit. Um dies durchführen zu können wird das Reisegebiet in eine Vielzahl räumlicher Intervalle unterteilt. Hierdurch wird zwar die verbrauchte Energie eines einzelnen Zuges minimiert, jedoch führt dies nicht zu einer Minimierung des Energieverbrauchs mehrerer Züge eines Liniennetzes.

Der Erfindung liegt daher die Aufgabe zu Grunde, ein Verfahren bereitzustellen, welches die genannten Nachteile behebt und gegenüber den bisherige Ansätzen in einer globalen Zielfunktion zusätzlich den Energieverbrauch und die Desynchronisationprobleme für mehrere Züge berücksichtigt. Die Erfindung soll gewährleisten, dass jeder Aspekt der Zielfunktion möglichst realistisch und effizient evaluiert wird, um auf diese Weise ein praktikables Verfahren zu erhalten.

Die Aufgabe wird erfindungsgemäß durch die Merkmale des Anspruches 1 gelöst.

Ein besonderer Vorteil der Erfindung liegt darin, dass bei dem Verfahren zur Fahrplanoptimierung in Liniennetzen unter Berücksichtigung des Optimierungsparameters ‚Energieverbrauch' die Optimierung des Energieverbrauchs für mehrere Züge eines Liniennetzes ermöglicht wird, indem die Fahrtkurven der Fahrpläne in Zeit-Intervalle aufgeteilt werden, wobei die Zeit-Intervalle jeweils bestimmte Zustände der durch die Fahrtkurve beschriebenen Fahrt wie Anfahrphase, Bremsphase oder dergleichen repräsentieren und erforderlichenfalls mit Attributen - wie 'Anfahren', 'Bremsen', 'neutral' oder dergleichen - und/oder Gewichten versehen werden, der von dem Liniennetz überdeckte Zeitraum derart in Zeit-Intervalle, so genannte Zeitscheiben, eingeteilt wird, dass durch eine solche Zeitscheibe von jeder Fahrtkurve höchstens ein Zeit-Intervall oder höchstens ein Teil eines Zeit-Intervalls überdeckt wird, für jede Zeitscheibe die Energieaufnahme und - abgabe unter Beachtung von Rückspeiseeffekten und/oder Desynchronisation der Anfahrvorgänge berechnet und durch Variation der Abfahrtzeiten der Züge eine den Optimierungsparameter 'Energieverbrauch' berücksichtigende Zielfunktion minimiert wird.

Ein Mittel zur Ausführung einer Fahrplanoptimierung in Liniennetzen unter Berücksichtigung des Optimierungsparameters 'Energieverbrauch' ist vorteilhafterweise als ein Computerprogramm realisiert, das es einem Computer ermöglicht, nachdem es in den Speicher des Computers geladen worden ist, eine Fahrplanoptimierung gemäß des Verfahrens nach Anspruch 1 durchzuführen.

Auf einem entsprechenden computerlesbaren Speichermedium ist ein Programm gespeichert, das es einem Computer ermöglicht, nachdem es in den Speicher des Computers geladen worden ist, eine Fahrplanoptimierung gemäß des Verfahrens nach Anspruch 1 durchzuführen.

Weitere Vorteile der Erfindung bestehen darin, dass eine globale Energieminimierung aller Fahrpläne unter Berücksichtigung der Rückspeiseeffekte durchgeführt wird. Damit können sich beträchtliche Kosteneinsparungen für die Betreiber der Bahnlinien ergeben. Testläufe an realen Beispielen haben Einsparungen von bis zu 5 % ergeben.

Die Anschlüsse zwischen einzelnen Linien (und damit der Fahrkomfort) werden optimiert, indem die Summe aller Umsteigezeiten minimiert wird. Testläufe an realen Beispielen haben die vorgegebenen Anschlusszeiten um bis zu 30 % reduziert.

Die Anzahl der benötigten Fahrzeuge wird durch die Anwendung des erfindungsgemäßen Verfahrens minimiert. Damit ergeben sich hohe Kosteneinsparungen für die Betreiber der Bahnlinien (Material sowohl als auch Personal).

Mit der Desynchronisation der Anfahrvorgänge wird eine Überlastung der Stromversorgung vermieden.

Durch Minimierung der Summe der Verspätungen, welche im Betrieb der Fahrpläne auftreten, wird die Stabilität der Fahrpläne maximiert. Das führt wiederum zu einem erhöhten Fahrkomfort sowie zu weiteren Kosteneinsparungen, weil damit durch Reduktion der Fahrplanpuffer die Fahrzeuganzahl möglicherweise noch weiter verringert werden kann.

Die Erfindung soll nachstehend anhand von einem zumindest teilweise in der Figur dargestellten Ausführungsbeispiel näher erläutert werden.

Es zeigen:

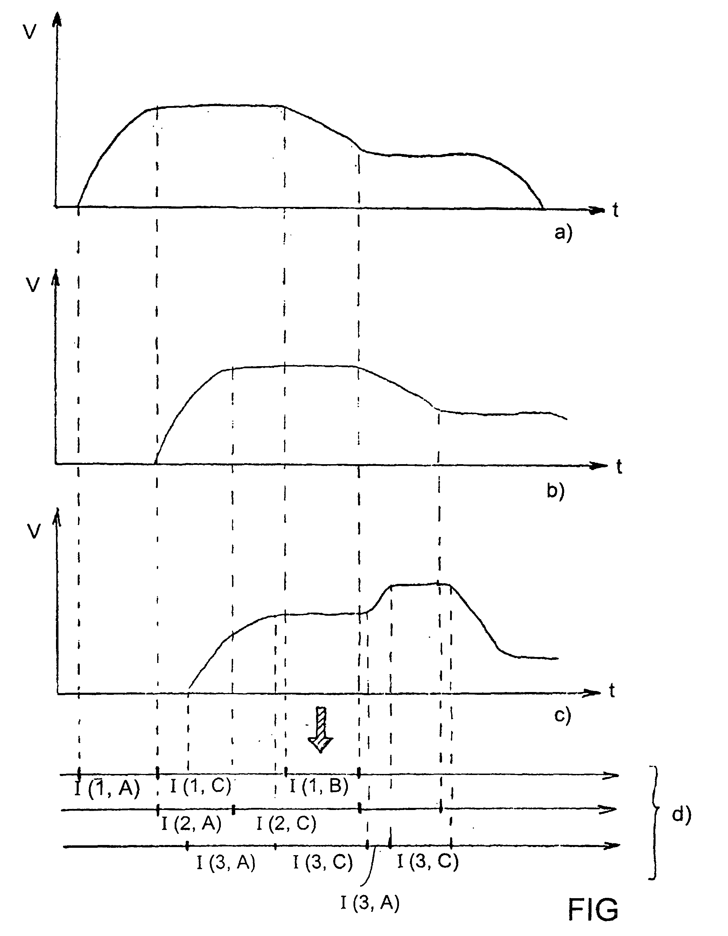

Fig. 1 a    Fahrkurve des Zuges 1 (auf Strecke 1),
Fig. 1 b    Fahrkurve des Zuges 2 (auf Strecke 1),
Fig. 1 c    Fahrkurve des Zuges 3 (auf Strecke 2),
Fig. 1 d    Herleitung der zu den jeweiligen Fahrkurven gehörigen, beim Sweep-Line-Algorithmus verwendeten Zeitintervalle.

Für jede Linie eines Liniennetzes ist ein Sollfahrplan vorgegeben, der für beide Fahrtrichtungen einer Linie die sollmäßigen Fahrten (in Form von Takten und Abfahrtszeiten an den Bahnhöfen) enthält. Zur Durchführung des erfindungsgemäßen Verfahrens ist ein diskretes Raster gegeben, in dem die Abfahrtszeiten und Takte variieren können. Durch Variation dieser Parameter wird eine globale Zielfunktion minimiert, welche die folgenden fünf Aspekte berücksichtigen kann:

- die benötigte Energie der betrachteten Fahrpläne (unter Berücksichtigung der Rückspeiseeffekte),
- die Summe der Umsteigezeiten zwischen den Linien dieser Fahrpläne,
- die Anzahl der benötigten Fahrzeuge,
- die Längen der Zeitbereiche mit simultanem Anfahren benachbarter Fahrzeuge ("Desynchronisationsproblem" - "benachbart" heißen solche Fahrzeuge, deren Anfahren sich gegenseitig beeinflusst),
- die Verspätungssumme der betrachteten Fahrpläne während des Betriebs.

Zur Lösung des Problems wird ein Optimierungsverfahren angewandt. Dabei wird im Variabilitätsbereich der vorgegebenen Sollfahrpläne diejenige Lösung bestimmt, welche die gemischte, globale Zielfunktion minimiert. Für die Optimierung wird der (kontinuierliche) Lösungsraum diskretisiert, weil die Zielfunktion nicht in analytischer Form vorliegt.

Für das Optimierungsverfahren können zwei Vorgehensweisen angewandt werden:

Als eine Vorgehensweise wird ein enumeratives Verfahren realisiert. Dabei wird jeder Lösungspunkt im definierten (diskreten) Lösungsraum evaluiert und das jeweils beste Resultat zwischengespeichert. Das Erreichen des globalen Optimums (innerhalb des Rasters) wird damit garantiert, da hierbei jede Kombination der Rasterpunkte ausgewertet wird.

Eine zweite Vorgehensweise nutzt ein lokales Suchverfahren. Dabei wird - ausgehend von einer Startlösung - zielgerichtet in Richtung der global optimalen Lösung gesucht. Das Erreichen des Optimums ist zwar nicht garantiert, aber man erreicht in der Regel nach deutlich kürzerer Zeit eine passable Lösung des Optimierungsproblems. Da die Zielfunktion typischerweise nicht konvex ist und viele lokale Minima aufweist, bietet sich eine Tabusuche an (siehe z. B. [3]). Dabei wird standardmäßig ein Gradientenverfahren realisiert, wo aus der aktuellen Lösung die nächste Lösung durch Bestimmung des stärksten Abstiegs der Zielfunktion bestimmt wird. Diese Iteration endet, wenn in der Nachbarschaft der aktuellen Lösung nur noch schlechtere Lösungen vorliegen. Allerdings ist die so erhaltene Lösung nicht unbedingt optimal.

Um aus diesem ggf. lokalen Minimum zu entkommen, wird mit dem Tabuansatz ein Kurzzeitspeicher (Tabuliste) vorgehalten, der die letzten berechneten, relativ guten Lösungen speichert. Dann wird diejenige benachbarte Lösung ermittelt, welche die geringste Verschlechterung in der Zielfunktion aufweist und außerdem nicht in der Tabuliste enthalten ist. Auf diese Weise wird mit der weiteren Iteration das lokale Minimum verlassen. (Ohne Tabuliste würde die Iteration sehr schnell zwischen zwei Lösungen schleifen, nämlich dem lokalen Minimum und der besten Lösung innerhalb der Nachbarschaft dieses Minimums). Als alternatives lokales Suchverfahren könnte "Simulated Annealing" eingesetzt werden (siehe z. B. [3]), was allerdings i. a. weniger effizient als Tabusuche ist.

Als Beispiel für die Ermittlung des gesuchten optimalen Lösung wird nachfolgend der Pseudo-Code für die zweite Variante des Optimierungsverfahrens (mit Gradienten und Tabusuche) dargestellt:

```
Tabuliste := {}
Wähle als Startlösung X die vorgegebenen Fahrpläne
Xmin := X
for(i = 0; 1 < max_iter; i++)
    bestimme eine Menge M von benachbarten Lösungen von X, in-
    dem alle Parameter der Fahrpläne um eine Schrittweite
    (nach oben und unten) innerhalb der vorgegebenen Variabi-
    litätsbereiche verändert werden
    für alle Lösungen in M, welche nicht in der Tabuliste ent-
    halten sind: setze X auf diejenige Lösung mit der größten
    Verbesserung des Zielfunktionswertes (bzw. mit der ge-
    ringsten Verschlechterung)
    füge X als erstes Element in die Tabuliste ein
    if(|Tabuliste| > max_tabu)
    entferne das letzte Element aus der Tabuliste
        if(ZF(X) < ZF(Xmin))
            Xmin := X
```

Dabei ist 'max_iter' die Anzahl der Iterationen für die Tabusuche. 'max_tabu' ist die maximale Länge der Tabuliste. ZF ist die globale Zielfunktion, welche (beispielsweise) wie folgt formuliert werden kann, um die einzelnen Aspekte der Zielfunktion individuell gewichten zu können:

$$ZF = e*E/E_0 + u*U/U_0 + f*F/F_0 + z*Z/Z_0 + v*V/V_0.$$

Hierbei ist E die benötigte Energie aller Fahrpläne des Liniennetzes, U die Summe der Umsteigezeiten zwischen den Linien der Fahrpläne, F die Anzahl der benötigten Fahrzeuge, Z die Summe der Längen der Zeitbereiche mit simultanem Anfahren benachbarter Fahrzeuge und V die Verspätungssumme der Fahrpläne während des Betriebs. Die mit 0 indizierten Werte sind die evaluierten Aspekte für die vorgegebenen Sollfahrpläne (Startlösung). Falls ein solcher Wert Null ist, wird stattdessen eine geeignete obere Schranke gewählt. Durch die Normierung der Aspekte auf die Werte der Startlösung soll eine Vergleichbarkeit der einzelnen Aspekte erreicht werden. Die Werte e, u, f, z und v stellen Gewichtungsfaktoren für die einzelnen Anteile der globalen Zielfunktion dar.

Nachfolgend soll erläutert werden, wie die fünf Aspekte der globalen Zielfunktion realistisch und effizient berechnet werden können:

Für die Berechnung der Umsteigezeiten werden für jede Einzelfahrt der betrachteten Fahrpläne die tangierten Umsteigebahnhöfe ermittelt. Damit kann man für diese Fahrt diejenigen Richtungen bestimmen, auf welche ein Passagier in einem der Umsteigebahnhöfe möglicherweise umsteigt. Für jede dieser Richtungen wird dann unter allen zugehörigen Einzelfahrten diejenige Fahrt bestimmt, auf welche mit der geringsten (nicht-negativen) Wartezeit umgestiegen werden kann. Dieser Zeitwert wird mit der Anzahl der Umsteiger und dem Gewichtungsfaktor der Umsteigebeziehung multipliziert und zur Summe der gewichteten Umsteigezeiten addiert.

Zur Berechnung des Energieverbrauchs eines betrachteten Fahrtplans werden für jede Einzelfahrt die Zeitintervalle berechnet, wo der Zug anfährt (d. h. Leistung aufnimmt) bzw. bremst (d. h. Leistung abgibt). Vgl. Fig. 1, in welcher ein Intervall I(F, L) das Zeitintervall beschreibt, in dem bei der Einzelfahrt F die Leistungsabgabe bzw. -aufnahme L erfolgt. F gibt somit die Nummer der Einzelfahrt an; L kann die Werte (Attribute)

A = Anfahrt (Leistungsaufnahme),
B = Bremsen (Leistungsabgabe) und
C = weder Anfahrt noch Bremsen

annehmen. Dann wird über den Tagesverlauf die Verteilung aller Situationen ermittelt, in denen bezüglich der Leistungsaufnahme und -abgabe im Liniennetz konstante Verhältnisse herrschen. Eine konstante Situation liegt etwa vor, wenn zwischen $t_1$ = 7:28:17 und $t_2$ = 7:30:04 Uhr z. B. genau die Züge 1, 3 und 4 Leistung abgeben, genau die Züge 2 und 6 Leistung aufnehmen und genau die Züge 5 und 7 weder anfahren noch bremsen (d. h.: für die Schnittmenge gilt

$$I(1, B) \cap I(3, B) \cap I(4, B) \cap$$

$$I(2, A) \cap I(6, A) \cap$$

$$I(5, C) \cap I(7, C) = (t_1, t_2)).$$

Eine solche Situation mit konstanten Verhältnissen erzeugt ein Intervall - im vorliegenden Beispiel das Intervall $(t_1, t_2)$. Ändert sich die Situation, beispielsweise, indem Zug 1 den Bremsvorgang beendet, so entspricht dieser (neuen konstanten) Situation ein anderes Intervall. Die effiziente Berechnung aller dieser Situationen (Intervalle) erfolgt mit Hilfe eines Sweep-Line-Algorithmus. Für eine bestimmte Situation wird dann mit Standardmethoden der Analyse elektrischer Netzwerke die Leistungsaufnahme des Fahrzeuges unter Berücksichtigung der Rückspeiseeffekte bestimmt. Das Produkt dieser Leistungen für alle anfahrenden Züge mit der Länge des Zeit-Intervalls, der sogenannten Zeitscheibe, welche zu der betrachteten Situation gehört, ergibt dann in Summe die netzseitige Energieaufnahme des Fahrplans für dieses Intervall (Zeitscheibe). Die Summe des Energieverbrauchs über alle Situationen ergibt schließlich den gesamten Energieverbrauch des Fahrplans.

Da eine Rückspeisung möglicherweise nicht in allen Teilen eines Liniennetz realisiert werden kann, ist es sinnvoll die Fahrzeuge nicht simultan, sondern in aufeinanderfolgenden Zeitintervallen anfahren zu lassen. Dieses Optimierungsproblem der Desynchronisation wird ebenfalls unter Berücksichtigung des Parameters 'Energieverbrauch', jedoch unter einem vom Rückspeisungseffekt verschiedenen Aspekt betrachtet. Zur Berechnung der Summe der Längen der Zeitbereiche mit simultanem Anfahren benachbarter Fahrzeuge werden für jede Einzelfahrt die Zeitintervalle berechnet, wo der Zug anfährt (d. h. Leistung aufnimmt). Deshalb werden bei Betrachtung der Desynchronisation nur Intervalle mit dem Attribut A berücksichtigt. Dann werden über den Tagesverlauf alle Situationen bestimmt, in denen bezüglich der Leistungsaufnahme konstante Verhältnisse herrschen. Eine konstante Situation liegt etwa vor, wenn zwischen 7:28:17 und 7:30:04 Uhr z. B. genau die Züge 1, 3 und 4 Leistung aufnehmen und genau die Züge 2, 5, 6 und 7 nicht anfahren. Die effiziente Berechnung aller Situationen erfolgt auch hier mit Hilfe eines Sweep-Line-Algorithmus. Für eine bestimmte Situation werden die Paare von anfahrenden Fahrzeugen bestimmt, welche benachbart sind. Die Anzahl dieser Paare wird dann mit der Länge der Zeitscheibe, welche zu der betrachteten Situation gehört, multipliziert. Dieses Produkt wird schließlich für alle Zeitscheiben aufsummiert.

Für die Einteilung der (Zeit-)Intervalle können Kriterien vorgegeben werden, wobei diese Kriterien von dem jeweils zugrundeliegenden Optimierungsparameter abhängen können: eine Einteilung für den Parameter "Energieoptimierung" kann sich von derjenigen für den Parameter "Desynchronisation" unterscheiden. Eine Einteilung der Intervalle ändert sich etwa auch in Abhängigkeit davon, bis zu welchem Betrag der Leistungsaufnahme ein Vorgang als "Anfahrt" definiert ist. Des weiteren können die (Zeit-)Intervalle mit Attributen versehen werden, wobei beispielsweise bei der Optimierung des Energieverbrauch unter Berücksichtigung des Rückspeisungseffektes die Intervalle als Anfahrts- bzw. Brems-Intervall attributiert werden könnten. Außerdem könnten Intervalle mit Gewichten versehen werden, die z. B. Faktoren wie Haupt- oder Nebenverkehrszeiten in den Berechnungen berücksichtigen lassen. Analoge (zweite) Kriterien können für die Auswertung (der Schnittmengen) der Intervalle beim Sweep-Line-Algorithmus vorgegeben werden.

Für die Berechnung der benötigten Fahrzeuganzahl werden effiziente Algorithmen der diskreten Optimierung (z. B. Flussverfahren) eingesetzt. Das in [4] beschriebene Verfahren beispielsweise kann auch sehr gute untere Schranken für die Fahrzeuganzahl bestimmen, welche sehr schnell berechenbar sind und daher aus Effizienzgründen für die globale Zielfunktion (anstelle der exakten Lösung) verwendet werden können.

Für die Ermittlung der Verspätungssumme, welche im Betrieb der betrachteten Fahrpläne zu erwarten ist, wird vorteilhafterweise ein Simulator ([5]) eingesetzt, welcher den Fahrbetrieb sehr realistisch nachbildet. Aus Effizienzgründen kann man sich darauf beschränken, hier nur einen kleinen Ausschnitt des dichtesten Taktes (bzw. der dichtesten Takte) zu simulieren.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung gemäß Anspruch 1 zu verlassen.

Anhang: Quellennachweise

[1] "HASTUS - Transit scheduling, daily operations, customer information", http://www.giro.ca/hastusa.htm.

[2] Kolonko, Engelhardt-Funke: Genetisch optimierte Fahrpläne und Kosten-Nutzen-Analysen für Verkehrsnetze, http://www.math.tu-clausthal.de/stochopt/HiTT_Deutsch/H iTT2000_Deutsch.htm.

[3] Z. Michalewicz, D. B. Fogel; "How to Solve It: Modern Heuristics", Springer-Verlag, 2000.

[4] Andreas Löbel, "Optimal Vehicle Scheduling in Public Transit", Shaker Verlag, 1998 (siehe auch http://www.zib.de/loebel/publications.html).

[5] Erhard, Schmidtke, Strahberger: "FALKO: Fahrplan-Validierung und -Konstruktion für spurgebundene Verkehrssysteme"; Signal+Draht, Heft 10/2000.

**Patentansprüche**

1. Verfahren zur Fahrplanoptimierung in Liniennetzen unter Berücksichtigung des Optimierungsparameters ‚Energieverbrauch', **dadurch gekennzeichnet, dass**

   - die Fahrtkurven der Fahrpläne in Zeit-Intervalle aufgeteilt werden, wobei die Zeit-Intervalle jeweils bestimmte Zustände der durch die Fahrtkurve beschriebenen Fahrt wie Anfahrphase, Bremsphase oder dergleichen repräsentieren und erforderlichenfalls mit Attributen - wie 'Anfahren', 'Bremsen', 'neutral' oder dergleichen - und/oder Gewichten versehen werden,
   - der von dem Liniennetz überdeckte Zeitraum derart in Zeit-Intervalle, so genannte Zeitscheiben, eingeteilt wird, dass durch eine solche Zeitscheibe von jeder Fahrtkurve höchstens ein Zeit-Intervall oder höchstens ein Teil eines Zeit-Intervalls überdeckt wird,
   - für jede Zeitscheibe die Energieaufnahme und -abgabe unter Beachtung von Rückspeisungseffekten und/oder Desynchronisation der Anfahrvorgänge berechnet und
   - durch Variation der Abfahrtzeiten der Züge eine den Optimierungsparameter 'Energieverbrauch' berücksichtigende Zielfunktion minimiert wird.

2. Verfahren nach Anspruch 1, **dadurch gekennzeichnet, dass** für jede Linie eines Liniennetzes ein Sollfahrplan als Startlösung vorgegeben wird.

3. Verfahren nach einem der Ansprüche 1 oder 2, **dadurch gekennzeichnet, dass** als Zielfunktion neben dem Optimierungsparameter ‚Energieverbrauch' weitere Parameter wie

   - die Summe der Umsteigezeiten zwischen den Linien des Fahrplans,
   - die Anzahl der benötigten Fahrzeuge,
   - die Längen der Zeitbereiche mit simultanem Anfahren benachbarter und/oder

- die Verspätungssumme des betrachteten Fahrplans während des Betriebs

berücksichtigt werden.

4. Verfahren nach einem der Ansprüche 1 bis 3, **dadurch gekennzeichnet, dass** für die Lösung des Optimierungsproblems der Lösungsraum diskretisiert wird.

5. Verfahren nach einem der vorhergehenden Ansprüche, **dadurch gekennzeichnet, dass** die Optimierung durch ein enumeratives Verfahren realisiert wird.

6. Verfahren nach einem der vorhergehenden Ansprüche, **dadurch gekennzeichnet, dass** ausgehend von einer Startlösung die Optimierung durch ein lokales Suchverfahren realisiert wird.

7. Verfahren nach einem der vorhergehenden Ansprüche, **dadurch gekennzeichnet, dass** bei der Optimierung eine Tabusuche zum Einsatz kommt.

8. Verfahren nach einem der vorhergehenden Ansprüche, **dadurch gekennzeichnet, dass** als Zielfunktion die folgende Formel verwendet wird:

$$ZF = e*E/E_0 + u*U/U_0 + f*F/F_0 + z*Z/Z_0 + v*V/V_0,$$

wobei

E die benötigte Energie aller Fahrpläne des Liniennetzes,
U die Summe der Umsteigezeiten zwischen den Linien der Fahrpläne,
F die Anzahl der benötigten Fahrzeuge,
Z die Summe der Längen der Zeitbereiche mit simultanem Anfahren benachbarter Fahrzeuge und
V die Verspätungssumme der Fahrpläne während des Betriebs,

die mit Null indizierten Werte die evaluierten Aspekte für die vorgegebenen Sollfahrpläne (Startlösung) und die Werte e, u, f, z und v Gewichtungsfaktoren für die einzelnen Anteile der globalen Zielfunktion beschreiben.

9. Verfahren nach einem der vorhergehenden Ansprüche, **dadurch gekennzeichnet, dass** die Optimierung zur Auswertung der Schnittmengen der Intervalle den Sweep-Line-Algorithmus benutzt.

10. Mittel, insbesondere Computerprogramm, das es einem Computer ermöglicht, nachdem es in den Speicher des Computers geladen worden ist, eine Fahrplanoptimierung gemäß des Verfahrens nach Anspruch 1 durchzuführen.

11. Computerlesbares Speichermedium, auf dem ein Programm gespeichert ist, das es einem Computer ermöglicht, nachdem es in den Speicher des Computers geladen worden ist, eine Fahrplanoptimierung gemäß des Verfahrens nach Anspruch 1 durchzuführen.

**Claims**

1. Method for optimizing timetables in line networks taking into account the optimization parameter of "energy consumption", **characterized in that**

- the journey curves of the timetables are divided into time intervals representing specific states of the journey described by the journey curve, such as starting-up phase, braking phase or the like and are, if necessary, provided with attributes such as "starting up", "braking", "neutral" or the like, and/or weightings,
- the time period which is covered by the line network is divided into time intervals, so-called timeslots, such that at maximum one time interval or at maximum part of the time interval is covered by such a timeslot of each journey curve,
- the energy consumption and output is calculated for each timeslot taking into account feedback effects and/ or desynchronization of the starting-up processes, and
- a target function which takes into account the optimization parameter of "energy consumption" is minimized

**EP 1 293 948 B1**

by varying the departure times of the trains.

2. Method according to Claim 1, **characterized in that** a reference timetable is predefined as a starting solution for each line of a line network.

3. Method according to one of Claims 1 or 2, **characterized in that** in addition to the optimization parameter of "energy consumption" further parameters such as

   - the sum of the transfer times between the lines of the timetable,
   - the number of required vehicles,
   - the length of the time periods with simultaneous starting up of adjacent vehicles and/or
   - the sum of delays of the timetable under consideration during operation

   are taken into account as target functions.

4. Method according to one of Claims 1 to 3, **characterized in that** the solution period is discretized for the solution of the optimization problem.

5. Method according to one of the preceding claims, **characterized in that** the optimization is implemented by means of an enumerative method.

6. Method according to one of the preceding claims, **characterized in that** the optimization by means of a local search method is implemented on the basis of a starting solution.

7. Method according to one of the preceding claims, **characterized in that** the optimization involves using a taboo search.

8. Method according to one of the preceding claims, **characterized in that** the following formula is used as the target function:

$$ZF = e*E/E_0 + u*U/U_0 + f*F/F_0 + z*Z/Z_0 + v*V/V_0,$$

   wherein

   E    is the required energy of all the timetables of the line network,
   U    is the sum of the transfer times between the lines of the timetables,
   F    is the number of vehicles required,
   Z    is the sum of the lengths of the time periods with simultaneous starting up of adjacent vehicles, and
   V    is the sum of delays of the timetables during operation,

   the values which have a zero index describing the evaluated aspects for the predefined reference timetables (starting solution) and the values e, u, f, z and v describing weighting factors for the individual components of the global target function.

9. Method according to one of the preceding claims, **characterized in that** the optimization uses the sweep-line algorithm to evaluate the cut-sets of the intervals.

10. Means, in particular a computer program which makes it possible for a computer to carry out optimization of timetables using the method according to Claim 1 after said means has been loaded into the memory of the computer.

11. Computer-readable storage medium on which a program which makes it possible for a computer to carry out optimization of timetables using the method according to Claim 1 after it has been loaded into the memory of the computer is stored.

**Revendications**

1. Procédé pour optimiser des tableaux de marche dans des réseaux ferroviaires en tenant compte du paramètre d'optimisation " consommation d'énergie ", **caractérisé en ce que**

   - les courbes de trajet dans les tableaux de marche sont réparties en intervalles de temps, chacun des intervalles de temps représentent alors des états donnés du trajet décrit par la courbe de trajet comme la phase de démarrage, la phase de freinage ou d'autres et sont le cas échéant munis d'attributs (comme " démarrer ", " freiner ", " neutre " ou autres) et/ou de pondérations,
   - la durée couverte par le réseau ferroviaire est subdivisée en intervalles de temps, appelées tranches, de telle manière qu'à l'aide d'une telle tranche chaque courbe couvre au plus un intervalle de temps ou au plus une partie d'un intervalle de temps,
   - la consommation d'énergie et la fourniture d'énergie sont calculées pour chaque tranche en tenant compte des effets de recyclage et/ou de la désynchronisation dans les processus de démarrage et
   - une fonction cible qui prend en compte le paramètre d'optimisation " consommation d'énergie " est minimisée en agissant sur les heures de départ des trains.

2. Procédé selon la revendication 1, **caractérisé en ce que**, pour chaque ligne d'un réseau ferroviaire, un tableau de marche théorique prédéfini sert de solution de départ.

3. Procédé selon l'une des revendications 1 ou 2, **caractérisé en ce que**, outre le paramètre d'optimisation " consommation d'énergie ", d'autres paramètres entrent dans la fonction cible comme

   - la somme des temps pour changer de train entre les lignes du tableau de marche,
   - le nombre des véhicules nécessaires,
   - les longueurs des laps de temps où des véhicules voisins partent en même temps et/ou
   - la somme des retards pour le tableau de marche en question pendant l'exploitation.

4. Procédé selon l'une des revendications 1 à 3, **caractérisé en ce que** la durée de la solution est rendue discrète pour résoudre le problème d'optimisation.

5. Procédé selon l'une des revendications précédentes, **caractérisé en ce que** l'optimisation est réalisée par un procédé d'énumération.

6. Procédé selon l'une des revendications précédentes, **caractérisé en ce que** l'optimisation est réalisée par un procédé de recherche locale à partir d'une solution de départ.

7. Procédé selon l'une des revendications précédentes, **caractérisé en ce que**, lors de l'optimisation, on utilise une recherche d'interdits.

8. Procédé selon l'une des revendications précédentes, **caractérisé en ce que** la formule suivante sert de fonction cible :

$$ZF = e * E/E_0 + u * U/U_0 + f * F/F_0 + z * Z/Z_0 + v * V/V_0, \text{ où}$$

   E est l'énergie nécessaire à tous les tableaux de marche dans le réseau ferroviaire,
   U est la somme des temps pour changer de train entre les lignes des tableaux de marche,
   F est le nombre des véhicules nécessaires,
   Z est la somme des longueurs des laps de temps où des véhicules voisins partent en même temps,
   V est la somme des retards pour le tableau de marche en question pendant l'exploitation,

   les valeurs à indice zéro décrivent les aspects évalués pour les tableaux de marche théoriques prédéfinis (solution de départ) et les valeurs e, u, f, z et v décrivent des facteurs de pondération pour les différentes parties de la fonction globale.

9. Procédé selon l'une des revendications précédentes, **caractérisé en ce que** l'optimisation pour exploiter les intersections d'ensembles des intervalles utilise l'algorithme " sweep line " de la ligne de balayage.

**10.** Moyen, en particulier programme informatique, qui, après qu'il a été chargé dans la mémoire de l'ordinateur, permet à un ordinateur d'exécuter une optimisation des tableaux de marche d'après le procédé selon la revendication 1.

**11.** Support d'enregistrement, lisible par ordinateur, sur lequel est enregistré un programme qui, après qu'il a été chargé dans la mémoire de l'ordinateur, permet à un ordinateur d'exécuter une optimisation des tableaux de marche d'après le procédé selon la revendication 1.

a)

b)

c)

I (1, A)    I (1, C)    I (1, B)

I (2, A)    I (2, C)

I (3, A)    I (3, C)    I (3, C)

d)

I (3, A)

FIG